# EUROPEAN PATENT APPLICATION

(11) **EP 2 615 777 A1**
(43) Date of publication of application: **17.07.2013**
(21) Application number: 13150793.1
(22) Date of filing: 10.01.2013
(51) Int. Cl.: H04L 12/26, H04L 29/06, H04N 21/24

(54) **Monitoring over-the-top adaptive video streaming**

(30) Priority: 12.01.2012 US 201213349431
(71) Applicant: Tektronix, Inc., Beaverton, Oregon 97077-0001 (US)
(72) Inventor: Dong, Wei, Richardson, TX Texas 75082 (US); Wilkinson, Robert Todd, Plano, TX Texas 75025 (US); Robinson, Paul Anthony, Huntingdon, Cambridgeshire PE28 4FJ (GB)
(74) Representative: Hofstetter, Schurack & Partner

(57) **Abstract**

Systems and methods for monitoring over-the-top adaptive video streaming in a network are described. In an embodiment, a method may include identifying a protocol used in the communication based, wherein the protocol may be one among a plurality of different adaptive video streaming protocols. Video sessions using a plurality of different protocols are monitored and video session data collected. User Quality of Experience (QoE) and Key QoE Indicators (KQI) are generated for the network. Network operators may access video session data to analyze initial buffering delays, rebuffering delays, bandwidth changes, and gaps during the video session.

## Description

### CROSS-REFERENCE TO RELATED APPLICATIONS

This application claims the benefit of the filing date of U.S. Provisional Patent Application No. 61/533,518, which is titled "Monitoring Over-The-Top IP Video for Bandwidth Usage, User Experience, and Data Analytics Feed for Other Applications" and was filed September 12, 2011, the disclosure of which is hereby incorporated by reference herein in its entirety.

### TECHNICAL FIELD

This specification is directed, in general, to data monitoring, and, more particularly, to systems and methods for monitoring over-the-top adaptive video streaming.

### BACKGROUND

Mobile data networks continue to experience an unprecedented expansion in total network traffic, and new types of client devices are consuming larger amounts of network bandwidth. In recent years, the widespread use of web-enabled smart phones, tablet devices, Internet-enabled TVs, gaming consoles, and the like has created a rapid increase in network traffic. Within the overall trend of network growth, video is expected to become the dominant consumer of data bandwidth.

Over-the-top (OTT) content delivery includes the delivery of video and/or audio data to a client device without the client's Internet provider or network operator being responsible for the content itself, but only for its communication. Generally speaking, OTT delivery excludes delivery that occurs through purchase or rental of video or audio content from the Internet provider or network operator (e.g., Comcast, AT&T, etc.), and typically refers to content that is available from a third party (e.g., NETFLIX^{®}, BLOCKBUSTER^{®}, HULU^{®}, YOUTUBE^{®}, iTUNES^{®}, BSkyB, ESPN, etc.). It is noted, however, that the same technology that is used to deliver OTT video is also being deployed by network operators, such as Comcast, to deliver their own streaming content and as such the methods described in this application will have applicability in such cases.

Adaptive streaming over HyperText Transfer Protocol (HTTP), Real Time Messaging Protocol (RTMP), and Real-Time Transport Protocol (RTP) has emerged as a dominating streaming media delivery technique. Today, many popular Internet media services utilize such adaptive streaming technologies to deliver seamless media streams to end-users with more tolerance on network transport conditions.

### SUMMARY

Embodiments of systems and methods for monitoring over-the-top adaptive video streaming are described herein. In contrast with conventional methods for monitoring of media-carrying packets, a new monitoring paradigm is described herein that is especially suitable for the monitoring of file-based media streams. In various embodiments, systems with media monitoring software and hardware may be deployed at one or more network locations and configured to generate media stream data records derived from software agents, probes, server logs and/or other sources. These media stream data records may then feed multiple advanced downstream applications to ensure optimized end user experience and/or provide new revenue opportunities for network operators.

Accordingly, in an embodiment, a method may include performing operations via one or more network monitoring devices. For example, a method may include monitoring a communication transmitted over a network between a client device and a video streaming server, and identifying a protocol used in the communication. The protocol may include one of a plurality of potentially different adaptive video streaming protocols. The method may also include creating a media stream pipeline associated with the client device, such a media stream pipeline may include a plurality of media files and a playback length associated with each of the plurality of media files.

The method may also include calculating, based at least in part upon the media stream pipeline, at least one of: how long the client device has buffered content, how fast the buffer is growing or shrinking, or when the client device will run out of content. The method may further include measuring a bitrate for at least a portion of the video stream based, at least in part, upon the media stream pipeline.

In some embodiments, the method may include recording a re-buffering event for the client device, the re-buffering event detected based, at least in part, upon the media stream pipeline, and recording a recovery event and a re-buffering duration associated with the rebuffering event based, at least in part, upon the media stream pipeline. The method may also include recording a flag for each of a plurality of time periods during the video stream based, at least in part, upon the media stream pipeline, each flag indicating a severity of a quality-of-experience (QoE) event. The method may further include aggregating the media stream pipeline with other media stream pipelines of other client devices corresponding to a given location within the network. Additionally or alternatively, the method may include determining that the client device's buffering of content exceeds a threshold level, based, at least in part, upon the media stream pipeline, and indicating potential fraud by the client device based, at least in part, upon the determination.

In some embodiments, one or more of the methods described herein may be performed by one or more computer systems. In other embodiments, a tangible computer-readable storage medium may have program instructions stored thereon that, upon execution by one or more computer systems, cause the one or more computer systems to perform one or more operations disclosed herein. In yet other embodiments, a system may include at least one processor and a memory coupled to the at least one processor, the memory configured to store program instructions executable by the at least one processor to perform one or more operations disclosed herein.

### BRIEF DESCRIPTION OF THE DRAWINGS

Reference will now be made to the accompanying drawings, wherein:

FIGURE 1 is a block diagram illustrating a system for monitoring over-the-top adaptive video streaming according to some embodiments;

FIGURE 2 illustrates individual media streams of different quality transported, segment-by-segment, over different HTTP streams according to some embodiments;

FIGURE 3 illustrates DF and MF streams that are part of an HTTP download transaction for an end-user session according to some embodiments;

FIGURE 4 is a block diagram of a monitoring system that tracks user experience data for a plurality of users' video sessions on different devices and using different protocols;

FIGURE 5 is a block diagram illustrating network monitoring software according to some embodiments;

FIGURE 6 is a flowchart of a method of monitoring OTT adaptive video streaming according to some embodiments; and

FIGURE 7 is a block diagram of a computer system configured to implement various systems and methods described herein according to some embodiments.

While this specification provides several embodiments and illustrative drawings, a person of ordinary skill in the art will recognize that the present specification is not limited only to the embodiments or drawings described. It should be understood that the drawings and detailed description are not intended to limit the specification to the particular form disclosed, but, on the contrary, the intention is to cover all modifications, equivalents and alternatives falling within the spirit and scope of the claims. Also, any headings used herein are for organizational purposes only and are not intended to limit the scope of the description. As used herein, the word "may" is meant to convey a permissive sense (*i.e*., meaning "having the potential to"), rather than a mandatory sense (*i.e*., meaning "must"). Similarly, the words "include," "including," and "includes" mean "including, but not limited to."

### DETAILED DESCRIPTION

As data networks experience unprecedented growth in total network traffic, network operators face unique challenges. Service providers wish to maintain sufficiently high quality-of-experience (QoE) levels to minimize churn and maximize service revenue. Historically, for networks focused primarily on data and/or mobile voice, this has been a manageable problem. With the advent and explosion of video traffic, however, it has become more difficult to maintain high QoE levels. At least in part to address these issues, a technique known as "adaptive bitrate streaming" (or simply "adaptive streaming") has been developed. Generally speaking, adaptive streaming techniques detect a user's bandwidth and/or CPU capacity and adjust the quality (or bitrate) of a video stream in response to the bandwidth and/or capacity. Existing techniques for determining video QoE are ineffective in evaluating adaptive streaming delivery methods. Accordingly, various systems and methods for monitoring over-the-top adaptive video streaming are described herein.

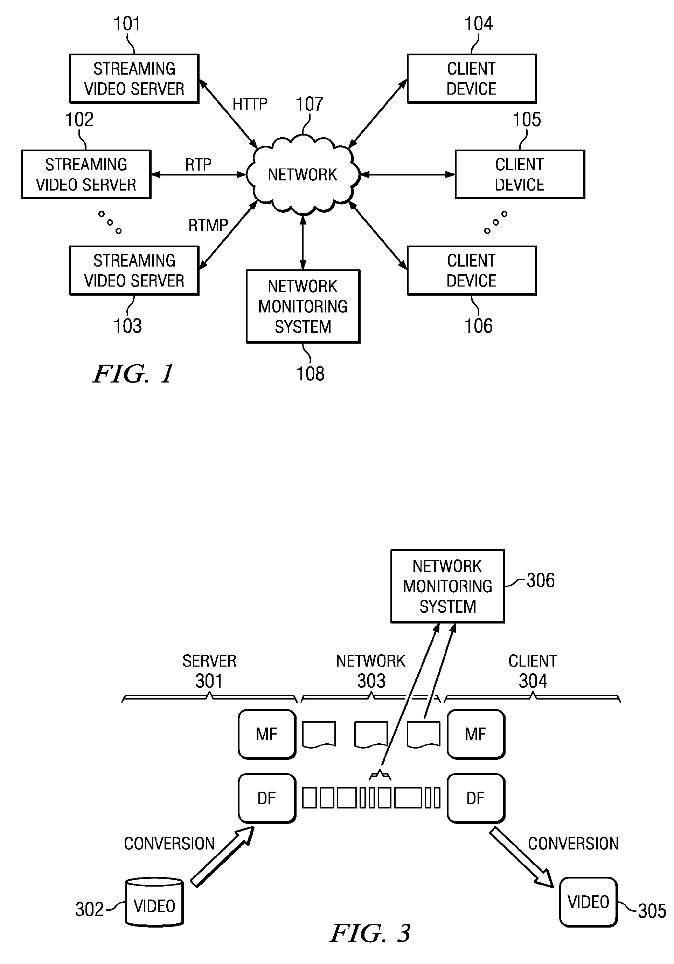

FIGURE 1 is a simplified block diagram illustrating a system for monitoring over-the-top adaptive video streaming according to one embodiment. A plurality of streaming video servers 101-103 provide video streams to client devices 104-106 through network 107. The video streams are monitored by network monitoring system 108 as the data packets comprising the video stream pass through network 107. The streaming video servers 101-103 may be, for example, the owner or source of the video content or an edge server within a content delivery network (CDN).

The protocols used to provide video content from streaming video servers 101-103 to client devices 104-106 are selected based upon the content provider, the content itself, and/or the client device 104-106. Adaptive streaming for video content is supported, for example, on Hypertext Transfer Protocol (HTTP), Real-Time Messaging Protocol (RTMP), and Real-time Transport Protocol (RTP). A typical service provider's network 107 serves many different types of client devices 104-106. At any particular time, client devices 104-106 are accessing video content from many different streaming video servers 101-103, which results in many different HTTP, RTMP and RTP sessions through network 107.

Each of the video sessions for the various client devices 104-106 have different start and stop times and have different bandwidths available. During each video session, the available bandwidth for that session may change multiple times. Also, the video stream may start and stop during the video session, which is likely to create gaps in the video stream. These issues make it difficult for the service provider to determine the QoE for subscribers.

To evaluate QoE and Key QoE Indicators (KQI) for subscribers, network monitoring system 108 correlates related data packets for each video session, tracks the bandwidth available for each video stream, detects bandwidth changes for each session, and detects gaps in each video stream. Monitoring system 108 tracks the same set of user experience information for each session and each client without regard to the protocol (e.g. HTTP, RTMP, RTP, etc.) used to support the video session. Using information such as how often the bandwidth changes on each stream, the different bandwidths used on each stream, the number of gaps detected in each steam, the monitoring system 108 can identify certain information about each users' experience. For example, the monitoring system may determine the screen resolution used, how often the screen resolution changes, the amount of buffering required for the stream, the duration of gaps in the video. The service provider may use this information to adjust the network services available to client devices 104-106, such as the bandwidth assigned to each user and the routing of data packets through network 107.

Client devices 104-106 may include any computer system or device such as, for example, a personal computer, laptop computer, tablet computer, mobile device, smart phone, network-enabled devices, web-enabled televisions, and the like. Client devices 104-106 may allow users to navigate the Internet or other data networks using a web browser application or the like via a graphical user interface (GUI). Additionally or alternatively, client devices 104-106 may access a content catalog made available by video streaming servers 101-103 through a stand-alone or web-based client application. The user may then request that a video (or other streaming content) be streamed to the client device 104-106.

Network 107 may include, for example, any suitable wired or wireless computer or data network including, for example, the Internet, or a third generation (3G), fourth generation (4G), or Long Term Evolution (LTE) wireless network.

Network monitoring system 108 may include a network monitor or analyzer, a packet sniffer, a probe, or the like, coupled to network 107.

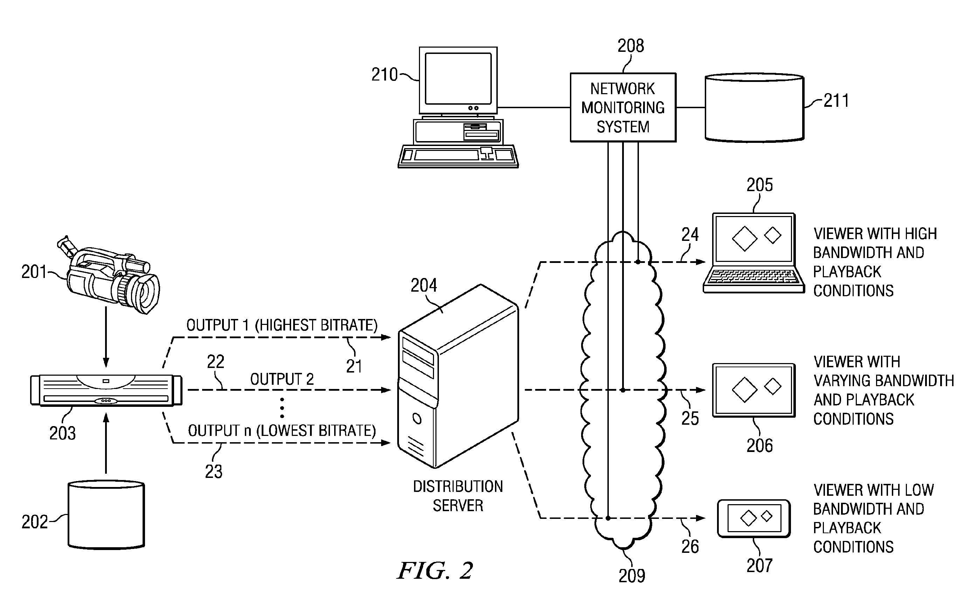

FIGURE 2 illustrates the distribution of a plurality of individual media streams according to one embodiment. The media content is distributed using adaptive streaming over HTTP, RTMP, RTP or other protocols. Live (201) or recorded (202) video content is distributed by media server 203 and may provide two or more versions (21-23) of the same content at different bit rates to distribution server 204. In one embodiment, distribution server 204 may function as streaming video server 101-103 (FIGURE 1). Distribution server 204 stores each version of the content encoded with a different bitrate.

When distribution server 204 receives a request for content from a client device 205-207, it determines which of the different versions of the content or which bitrate to provide to the requesting device. Distribution server 204 may select a content version based on the bandwidth available on network 208 or based on characteristics of the requesting devices 205-207, such as the devices' processing capabilities, screen resolution, or service agreement. For example, device 205 may have a high bandwidth and/or CPU processing power and, therefore, receives high bitrate video content (24) for the best playback conditions. Device 207 may have low bandwidth and/or CPU processing power and, therefore, receives low bitrate video content (26) that can be supported by the worst playback conditions. Device 206 may have varying bandwidth or other changing capabilities, which requires distribution server 204 to select a bitrate (25) for the requested content that is supported by the current conditions for device 206.

Network monitoring system 208 is coupled to interfaces in network 209 and captures data packets for video sessions 24-26. Network monitoring system 208 may include a plurality of monitoring probes that are coupled to one or more network interfaces. The monitoring probes passively capture messages, data packets, or protocol data units (PDU) from the interfaces without interfering with the operation of network 209. The monitoring probes process the captured data immediately and/or pass the data to a central monitoring server. The captured data may be correlated and processed in network monitoring system 208 and information regarding the current status of network 209 and video sessions 24-26 is extracted. A network operator may access this information using workstation 210. Captured data may be stored by the monitoring system in database 211.

The network monitoring system 208 may be coupled to network 209 interfaces via packet capture devices, such as high-speed, high-density probes that are optimized to handle high bandwidth IP traffic. The network monitoring system 208 passively captures message traffic from the interfaces without interrupting network 209's operation. The network monitoring system 208 may capture and correlate the packets associated with specific data sessions 24-26 on network interfaces. The related packets can be combined into a record for a particular flow, session or call on the network 209. In an alternative embodiment, the network monitoring system 208 may be an active component, such as a software agent, that resides on a network node, switch, or server and that captures data packets passing into or out of the node, switch, or server.

During video streaming sessions, playback conditions change from their initial state for any given device 205-207. For example, the network bandwidth and/or device capabilities may increase or decrease. Upon detection of such a change, distribution server 204 switches the video stream to a different version of the same content, such as a different bitrate. Network monitoring system 208 detects these changes in the video session and stores this data in database and/or presents it to a network operator on workstation 210.

FIGURE 3 illustrates an adaptive streaming video session according to one embodiment. Media file/delivery format (DF) and manifest file (MF) streams are part of an HTTP download transaction for an end-user. In other embodiments, the RTMP and RTP protocol may be used to support the adaptive streaming session. Virtually all implementations of adaptive streaming transport two types of files between client and server for the same video. Specifically, server 301 converts video from source 302 into a series of manifest files (also known as "playlists") that contain information such as available video file names, corresponding bit rates, encoding types and a way to indicate time/length of the media file. Server 301 also creates a series of media files (video/audio segments) as described by the manifest files. The MF and DF files are transmitted over network 303, and then re-combined by client device 304 to be played on display 305.

Congestion and bandwidth changes on network 303 affect the flow of the MF and DF files to client 305 and, therefore, the quality of the video played on display 305. Network monitoring system 306 captures the MF and DF files for multiple video sessions. Network monitoring system 306 analyzes the captured MF and DF files and extracts session data to determine the user QoE and KQIs.

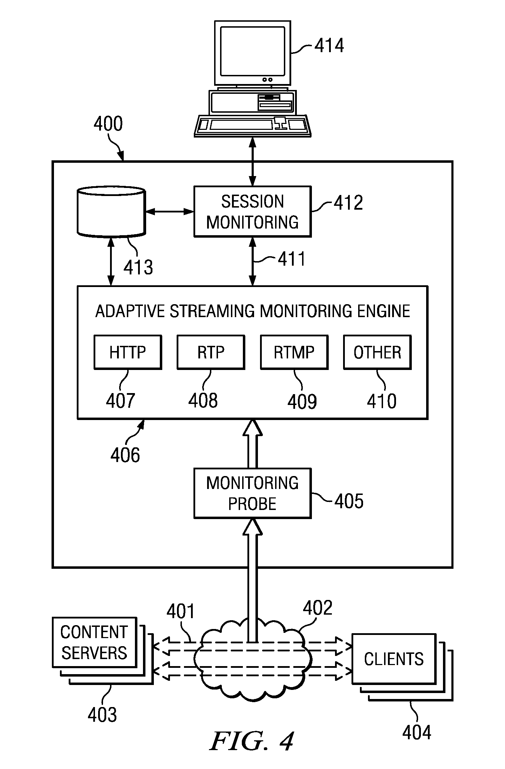

FIGURE 4 is a block diagram of a monitoring system 400 that tracks user experience data for a plurality of users' video sessions on different devices and using different protocols. A plurality of video sessions 401 are transmitted across network 402 between content servers 403 and client devices 404. Content servers 403 may use adaptive streaming to provide video sessions 401 over HTTP, RTMP, RTP or other protocols. The protocol used for each video session may be dependent upon the source of the content. For example, different content providers may be use different protocols. The bitrate used for each video session is dependent upon the network 402 bandwidth assigned to the session or the client. The bandwidth may vary on a session-by-session basis and/or may vary during individual video sessions. The capabilities of clients 404 may also affect the bitrate used for individual video sessions.

Monitoring probe 405 captures data packets from network 402, including data for video sessions 401. Monitoring probe 405 determines identifying information for the captured data packets and combines related data into session records. Monitoring probe 405 feeds session records and captured packet data to adaptive streaming monitoring engine 406. The session record may be comprised of multiple segments that are provided to adaptive streaming monitoring engine 406 periodically while the associated video session is active. The protocol used for each session record is identified by adaptive streaming monitoring engine 406, which uses the appropriate algorithm 407-410 to extract session data from each session record. In one embodiment, adaptive streaming monitoring engine 406 is a software application running one or more processors in monitoring system 400.

The session data is provided as a monitoring feed 411 to session monitoring application 412 and/or is stored to database 413. Database 413 may also store subscriber information and client device data. A network operator may access the real-time or stored session data via workstation terminal 414.

Monitoring system 400 allows the service provider for network 402 to collect data from all video sessions without regard to the protocol used. Monitoring system 400 identifies the protocol used for the video session and then extracts session data and parameters. Data for multiple sessions is stored to database 413, which allows the service provider to track each session or to extract system-wide parameters. Monitoring probe 405 and/or adaptive streaming monitoring engine 406 identity the type of protocol being used for each session by analyzing each data packet for that session. The data packets for one session may correspond to a 2-10 second fragment of a video being streamed to the client device.

Monitoring probe 405 and/or adaptive streaming monitoring engine 406 also track the bandwidth available to each video session and identify bandwidth changes that occur in real-time. Monitoring probe 405 and/or adaptive streaming monitoring engine 406 detect when gaps or missing fragments occur in the stream of data packets for any of the sessions. The session parameters, bandwidth information, and gap data is collected to database 413 and/or presented to the service provider on workstation 414.

Data stored to database 413 can be queried by the service provider, for example, on a per-session, per-user, per-device, or per-protocol basis. Monitoring system 400 uses the collected information and generates QoE and KQIs for each session and for the overall network. The QoE and KQIs may be based, for example, on how often rebuffering, screen resolution changes, gaps, and/or missing fragments are detected. Excessive buffering during the session (*i.e*. rebuffering), numerous screen resolution changes, and gaps in the video stream may lower the user's QoE. Also, the length of the delay between video selection or request and the start of the video session stream (*i.e*. initial buffering) and the compression levels used during the session may also affect the user's QoE.

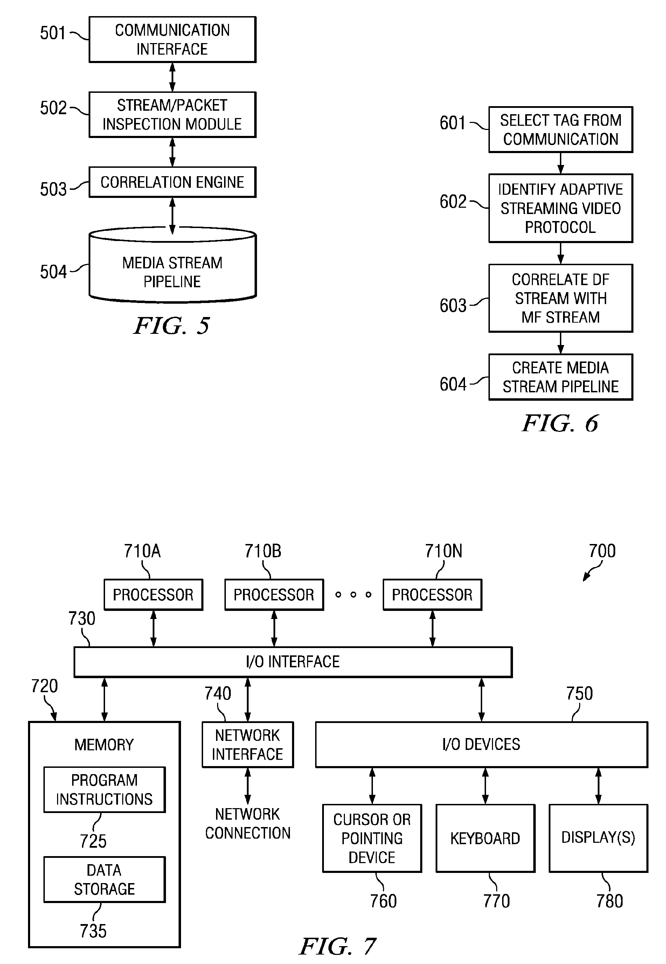

FIGURE 5 is a block diagram illustrating network monitoring software according to some embodiments. In some cases, the network monitoring software may be executed, at least in part, by network monitoring system 400 (FIGURE 4). Communication interface 501 may be configured to allow the network monitoring software to receive packets and data exchanged over network 402. A video stream and/or packet inspection module 502, such as adaptive streaming monitoring engine 406, may be configured to receive data obtained by communication interface 501 and extract certain information from that data. Correlation engine 503 may be configured to use the extracted information to create media stream pipelines 504 for each client device 404, which may then be stored in database 413.

Generally speaking, database 413 may include any suitable type of application or data structure that may be configured as a persistent data repository. For example, database 413 may be configured as a relational database that includes one or more tables of columns and rows and that may be searched or queried according to a query language, such SQL or the like. Alternatively, database 413 may be configured as a structured data store that includes records formatted according to a markup language, such as XML or the like. In other embodiments, database 413 may be implemented using one or more arbitrarily or minimally structured files managed and accessible through a corresponding type of application.

In various embodiments, modules 501-504 shown in FIGURE 5 may represent sets of software routines, logic functions, and/or data structures that are configured to perform operations described in connection with FIGURE 4. Although modules 501-504 are shown as distinct logical blocks, in other embodiments at least some of the functionality provided by these modules may be combined into fewer blocks. Conversely, one or more of modules 501-504 may be implemented such that it is divided among two or more logical blocks. Moreover, although shown with a particular configuration, in other embodiments these various modules may be rearranged in other ways.

FIGURE 6 is a flowchart of a method of monitoring OTT adaptive video streaming according to some embodiments. In various implementations, this method may be performed, at least in part, by network monitoring system 400 (FIGURE 4). At block 601, the method may include selecting a tag from a communication transmitted over a network (*e.g*., network 402) between a client device (*e.g.,* client 404) and a video streaming server (*e.g.,* content server 403). Then, at block 602, the method may include identifying a protocol used in the communication based, at least in part, upon the selected tag, where the identified protocol is one among a plurality of different adaptive video streaming protocols.

In various embodiments, different adaptive streaming implementations may have different tags for identification purposes from monitoring perspective. For example, MICROSOFT^{®} Smooth Streaming clients, such as NETFLIX^{®} WINDOWS^{®} client, have ".ismv" or ".isma" in HTTP GET request URL. Meanwhile, APPLE^{®} HTTP Live Streaming defines a set of unique "EXT-X-*" tags specifically for streaming control purpose that may be identified from the HTTP TCP stream. Other ways to identify these streams may include using a list of preconfigured host IDs or Internet protocol (IP) addresses. This approach has the advantage of consuming less monitoring equipment resources, but at the expense of auto-discovery. Thus, it may be acceptable in some deployment scenarios where the interested hosts/IPs are well known.

At block 603, the method may include correlating a Delivery Format (DF) stream with a Manifest File (MF) stream exchanged between the client device and the video streaming server during a video stream based, at least in part, upon the identified protocol. Once an adaptive streaming stream is identified, it is possible to correlate between the main movie HTTP request (triggered by viewer through the client) and subsequent HTTP requests for each 2-10 second movie segments, for example. Then, at block 604, the method may include creating a media stream pipeline associated with the client device and based, at least in part, upon the correlated DF and MF streams.

The correlation between DF and MF streams may be used to combine all individual HTTP download transactions into one logical end user session, thus enabling downstream applications measuring usage, user experience, and/or other analytics at end-user level. In various embodiments, however, different adaptive streaming protocols may implement the DF/MF streams differently. Also, different clients (*e.g*., browsers, standalone applications, etc.) may behave differently even for the same protocol. In some cases, some of the information needed for correlation may be transported on the network with transport layer security (TLS) or other encryption. As a result, different levels of correlation are achievable in different scenarios.

Generally speaking, video sessions for HTTP adaptive streaming may be divided into three stages. In stage 1, a session is set up. Client and authentication server establish the session based on client's choice of content. Client's credentials and/or media availability may be checked. In stage 2, initial MF exchanges are performed. This stage may involve the client's interaction with a CDN or streaming server, and the transmission or receipt of MFs that describe the availability of different bandwidth (quality) of media streams and codecs. In stage 3, the client may then request individual media streams of different quality based on its CPU/bandwidth availability, transported, segment-by-segment, over different HTTP streams from the CDN server. Both Stage 1 and 2 communications may happen inside a HTTP secured (HTTPS) tunnel, and therefore may not be readily available to a network monitoring system. Stage 3 typically takes place using HTTP, because the media content is already encrypted with digital rights management (DRM) encryption or the like. Because the implementation of HTTP adaptive streaming is diverse between different vendors, methodologies to build specific per-client media stream pipelines may vary depending upon the particular implementation.

For example, in a MICROSOFT^{®} Smooth Streaming implementation (*e.g*., when a SILVERLIGHT^{®} client application within client 105 elects to use Smooth Streaming application program interfaces (APIs)), video ID info is carried in each client request to the server.

On the other hand, NETFLIX^{®} elects to build its SILVERLIGHT^{®} clients without using the Smooth Streaming APIs, although it provides "Seamless Adaptive Streaming" implementation with almost identical user experience. Compared to Smooth Streaming, it builds in more security by carrying MFs in secured TLS tunnels (Stage 2). Some NETFLIX^{®} clients such as the NETFLIX^{®} for iPAD^{®} app even carry the initial client/server exchanges (Stage 1) in secured tunnels as well.

Specifically, all the client requests for the same media (both video and audio) streams have the same URL token which may, in some cases, be distinct from the previously described video ID. Therefore, such a token may also be used to correlate media sessions.

Meanwhile, APPLE^{®} HTTP Live Streaming uses a two-level MF structure. The initial MF contains bandwidth/codec information for each available media files for the same media stream. In some embodiments, these media sequence tags may be used to establish a list of requests expected from the client. When a request comes in from the client, the URL may be compared with the URLs listed in the MF file and its duration (8 seconds) may be recorded for the segment as well. In some cases, maintaining such a list of sequences and tags may allow monitoring system 400 to build a list per HTTP streaming client. This may establish a pipeline of media files available for the client playback in the monitoring software. By tracking the number of files and the playback length of each file per client, this technique may also allow the monitoring software to calculate how long the client has buffered content, how fast the buffer is growing/shrinking, and how soon the content will run out at client side and therefore trigger re-buffering.

In some embodiments, the bitrate for each requested media file may also be made available by monitoring the MF/DF files. Particularly, the bitrate for the video fragment may be identified from the corresponding URL. In these cases, changes in bitrate may be directly reflected on the client request URLs.

On the other hand, a NETFLIX^{®} client does not transmit bitrate info in Stage 3 client requests (without the benefit of an MF). It does, however, consistently embed sequence numbers (in bytes) for each requested media segments.

It should be noted that the same segment may be transmitted over multiple TCP streams. Therefore, a session record may be maintained for all HTTP/TCP streams and track the segments individually within a session context. The bitrate may be calculated as the summation of all bytes transferred in a session over any specific time period. Because a client may be configured to buffer a few minutes of media each time when a media stream is being established (*e.g*., initial download, bitrate change, trick modes etc.), the bitrate calculation may be taken periodically until it stabilizes. When it does stabilize, the calculated bitrate may match the intended bitrate of the DFs transmitted at the time.

In contrast, APPLE^{®} HTTP Live Streaming describes bitrate in the bandwidth parameter of the EXT-X-STREAM-INF tag per video fragment. By monitoring what bitrate file has been requested by client, network monitoring system 400 may track bitrate changes when client requests a new file that has a different bandwidth compared to the files that it has previously requested.

Based on the capabilities described above, network monitoring system 400 may then be configured to provide a set of advanced features for HTTP Adaptive Streaming monitoring. For example, network monitoring system 400 may be configured to aggregate per-client media stream bandwidth usage, both network-wide and specific to certain network locations. As such, in some embodiments, network monitoring system 400 may give operators the ability to visualize the impact of adaptive streaming to their network load. Historical data may be accumulated, for example, to project trending for network planning purposes.

Furthermore, multiple per-client key-quality indicators (KQIs) may be measured based on an analysis of that client's media pipeline. For instance, re-buffering is generally caused by an interruption in the video stream and may therefore cause great viewer QoE degradation. The frequency of this negative event per client may be measured, for example, by monitoring the media playback length. As the remaining length goes below a critical threshold and the buffer size is declining, re-buffering event may be recorded and reported. In some implementations, these various parameters may be configurable per type of client (e.g., device, network, application, etc.). Also, when the remaining playback length goes back to normal, a recovery event may be recorded along with the time for re-buffering (*i.e*., playback interruption time).

Frequent bitrate churns may also significantly degrade user QoE as some clients (such as XBOX^{®}) cannot generally handle the event in a seamless manner due to the reinitialization of components necessary for switching playback streams between different bitrates, which may also serve as a pre-congestion indicator. XBOX^{®} clients may be identified, for example, from user-agent fields in HTTP client requests.

In some embodiments, all QoE events may be recorded in the per client data record for further analysis. Based on the severity and frequency of the events, a different type of flag (*e.g*., green/yellow/red) may be recorded for every monitoring or reporting period (*e.g.,* 30 seconds) for the duration of the media stream. As such, the pattern of the QoE flags may be used for root cause analysis, as well as other application. For example, if a media stream is played for a few minutes and, toward the end of playback, a series of red/yellow flags is recorded and the stream is terminated by the user shortly afterwards, such a sequence of events may indicate that user gave up on watching the video because of a severe quality degradation.

In some embodiments, all per-client KQI records may be aggregated based upon specific network locations these streams are monitored to generate a per node and/or location video congestion analysis. In addition to providing an aggregated view of all streams in that location (*e.g*., in the form of a histogram of percentage of red/yellow/green streams every 30 seconds), aggregated records may similarly be used for root cause analysis or the like. For instance, if at one particular location the media QoE degradation happens in very fixed intervals, it may indicate a network issue with misconfigured equipment.

One of the concerns of digital media streaming is piracy and illegal copying of content. Therefore, clients are usually allowed only very limited buffering and no storing for the streaming media. Using the same per client media stream pipeline, excessive buffering of media content may be detected at per client level and alarms can be raised based on policy violations. This is possible because the media stream DFs for the same session have been properly identified and aggregated at per session level as described above. Without this session correlation, the media downloads would be identical to regular HTTP web downloads and difficult or impossible to be detected as fraud.

Embodiments of systems and methods for monitoring over-the-top adaptive video streaming, as described herein, may be implemented or executed by one or more computer systems. One such computer system is illustrated in FIGURE 7. In various embodiments, computer system 700 may be a server, a mainframe computer system, a workstation, a network computer, a desktop computer, a laptop, or the like. For example, in some cases, network monitoring system 115 shown in FIGURE 1 may be implemented as computer system 700. Moreover, one or more of streaming video server 100 or client device 105 may include one or more computers in the form of computer system 700. As explained above, in different embodiments these various computer systems may be configured to communicate with each other in any suitable way, such as, for example, via network 110.

As illustrated, computer system 700 includes one or more processors 710 coupled to a system memory 720 via an input/output (I/O) interface 730. Computer system 700 further includes a network interface 740 coupled to I/O interface 730, and one or more input/output devices 750, such as cursor control device 760, keyboard 770, and display(s) 780. In some embodiments, it is contemplated that a given entity (*e.g*., network monitoring system 115) may be implemented using a single instance of computer system 700, while in other embodiments multiple such systems, or multiple nodes making up computer system 700, may be configured to host different portions or instances of embodiments. For example, in one embodiment some elements may be implemented via one or more nodes of computer system 700 that are distinct from those nodes implementing other elements (*e.g*., a first computer system may implement stream/packet inspection module 405 while another computer system may implement account correlation engine 410 of network monitoring system 115).

In various embodiments, computer system 700 may be a single-processor system including one processor 710, or a multi-processor system including two or more processors 710 (*e.g*., two, four, eight, or another suitable number). Processors 710 may be any processor capable of executing program instructions. For example, in various embodiments, processors 710 may be general-purpose or embedded processors implementing any of a variety of instruction set architectures (ISAs), such as the x86, PowerPC®, ARM®, SPARC®, or MIPS® ISAs, or any other suitable ISA. In multi-processor systems, each of processors 710 may commonly, but not necessarily, implement the same ISA. Also, in some embodiments, at least one processor 710 may be a graphics processing unit (GPU) or other dedicated graphics-rendering device.

System memory 720 may be configured to store program instructions and/or data accessible by processor 710. In various embodiments, system memory 720 may be implemented using any suitable memory technology, such as static random access memory (SRAM), synchronous dynamic RAM (SDRAM), nonvolatile/Flash-type memory, or any other type of memory. As illustrated, program instructions and data implementing certain operations, such as, for example, those described in connection with FIGURES. 1-5, may be stored within system memory 720 as program instructions 725 and data storage 735, respectively. In other embodiments, program instructions and/or data may be received, sent or stored upon different types of computer-accessible media or on similar media separate from system memory 720 or computer system 700. Generally speaking, a computer-accessible medium may include any tangible storage media or memory media such as magnetic or optical media-*e.g*., disk or CD/DVD-ROM coupled to computer system 700 via I/O interface 730. Program instructions and data stored on a tangible computer-accessible medium in non-transitory form may further be transmitted by transmission media or signals such as electrical, electromagnetic, or digital signals, which may be conveyed via a communication medium such as a network and/or a wireless link, such as may be implemented via network interface 740.

In an embodiment, I/O interface 730 may be configured to coordinate I/O traffic between processor 710, system memory 720, and any peripheral devices in the device, including network interface 740 or other peripheral interfaces, such as input/output devices 750. In some embodiments, I/O interface 730 may perform any necessary protocol, timing or other data transformations to convert data signals from one component (*e.g*., system memory 720) into a format suitable for use by another component (*e.g*., processor 710). In some embodiments, I/O interface 730 may include support for devices attached through various types of peripheral buses, such as a variant of the Peripheral Component Interconnect (PCI) bus standard or the Universal Serial Bus (USB) standard, for example. In some embodiments, the function of I/O interface 730 may be split into two or more separate components, such as a north bridge and a south bridge, for example. In addition, in some embodiments some or all of the functionality of I/O interface 730, such as an interface to system memory 720, may be incorporated directly into processor 710.

Network interface 740 may be configured to allow data to be exchanged between computer system 700 and other devices attached to a network, such as other computer systems, or between nodes of computer system 700. In various embodiments, network interface 740 may support communication via wired or wireless general data networks, such as any suitable type of Ethernet network, for example; via telecommunications/telephony networks such as analog voice networks or digital fiber communications networks; via storage area networks such as Fiber Channel SANs, or via any other suitable type of network and/or protocol.

Input/output devices 750 may, in some embodiments, include one or more display terminals, keyboards, keypads, touch screens, scanning devices, voice or optical recognition devices, or any other devices suitable for entering or retrieving data by one or more computer system 700. Multiple input/output devices 750 may be present in computer system 700 or may be distributed on various nodes of computer system 700. In some embodiments, similar input/output devices may be separate from computer system 700 and may interact with one or more nodes of computer system 700 through a wired or wireless connection, such as over network interface 740.

As shown in FIGURE 7, memory 720 may include program instructions 725, configured to implement certain embodiments described herein, and data storage 735, comprising various data accessible by program instructions 725. In an embodiment, program instructions 725 may include software elements of embodiments illustrated in the above figures. For example, program instructions 725 may be implemented in various embodiments using any desired programming language, scripting language, or combination of programming languages and/or scripting languages (*e.g*., C, C++, C#, Java™, JavaScript™, Perl, etc). Data storage 735 may include data that may be used in these embodiments. In other embodiments, other or different software elements and data may be included.

A person of ordinary skill in the art will appreciate that computer system 700 is merely illustrative and is not intended to limit the scope of the disclosure described herein. In particular, the computer system and devices may include any combination of hardware or software that can perform the indicated operations. In addition, the operations performed by the illustrated components may, in some embodiments, be performed by fewer components or distributed across additional components. Similarly, in other embodiments, the operations of some of the illustrated components may not be performed and/or other additional operations may be available. Accordingly, systems and methods described herein may be implemented or executed with other computer system configurations.

The various systems and methods illustrated in the figures and described herein represent example embodiments of systems and methods for monitoring over-the-top adaptive video streaming. In various embodiments, the techniques described herein my provide video traffic characterization capabilities using technologies that recognize different types of video traffic and store bandwidth usage information throughout the network, for example, for historical trending. Alarms may be set and triggered based on usage, thus detecting excessive and/or abnormal patters in specific locations. Moreover, detailed records of each content delivery session may be provided. The information in these records may serve as an input for policy management system to provide differentiated network services based on pre-set policies and/or to enable the optimization of video content delivery. In some cases, the techniques described herein may also enable differentiating premium content from other types of content, and thus ensure proper charging for their respective delivery. In addition, data warehousing and/or data mining capabilities based on video session records may be combined with other subscriber information (*e.g*., demographics) to enable target product and/or advertisement offerings.

The various techniques may be implemented in software, hardware, or a combination thereof. The order in which each operation of a given method is performed may be changed, and various elements of the systems illustrated herein may be added, reordered, combined, omitted, modified, etc. Various modifications and changes may be made as would be clear to a person of ordinary skill in the art having the benefit of this specification. It is intended that the invention(s) described herein embrace all such modifications and changes and, accordingly, the above description should be regarded in an illustrative rather than a restrictive sense.

## Claims

1. A method, comprising:
performing, via one or more network monitoring devices,
capturing data packets from network interfaces, the data packets associated with a plurality of video sessions;
correlating the data packets to one of the videos sessions;
identifying a protocol used for each of the video sessions;
extracting adaptive streaming parameters from each of the video sessions based upon the type of protocol used; and
generating Quality of Experience (QoE) data for the plurality of video sessions.

2. The method of claim 1, wherein the protocol used for each of the video streams is one among a plurality of different adaptive video streaming protocols.

3. The method of claim 1, further comprising:
determining a bandwidth available for a video session.

4. The method of claim 3, further comprising:
identifying changes in the bandwidth assigned to a video session during the video session.

5. The method of claim 1, further comprising:
determining an initial delay at a client device caused by buffering of video session data after an initial request for video content.

6. The method of claim 1, further comprising:
determining when a client device must pause a video playback to buffer additional data during a video session.

7. The method of claim 1, further comprising:
identifying changes in screen resolution on a client device during a video session.

8. The method of claim 1, further comprising:
correlating a Delivery Format (DF) stream with a Manifest File (MF) stream exchanged between a client device and a video streaming server for each of the video sessions.

9. The method of claim 8, further comprising:
creating a media stream pipeline associated with the client device and based, at least in part, upon the correlated DF and MF streams.

10. The method of claim 9, further comprising:
performing, via the one or more network monitoring devices,
measuring a bitrate for at least a portion of the video stream based, at least in part, upon the media stream pipeline.

11. The method of claim 1, further comprising:
performing, via the one or more network monitoring devices,
recording a re-buffering event for the client device, the re-buffering event detected based, at least in part, upon the media stream pipeline; and
recording a recovery event and a re-buffering duration associated with the re-buffering event based, at least in part, upon the media stream pipeline.

12. A system, comprising:
at least one processor; and
a memory coupled to the at least one processor, the memory configured to store program instructions executable by the at least one processor to cause the system to:
identify one of a plurality of potentially different adaptive video streaming protocols used between a client device and a video streaming server;
calculate at least one of: how long the client device has buffered content, how fast the buffer is growing or shrinking, or when client device will run out of content; and
record a quality-of-experience (QoE) event including a re-buffering, a recovery, and a re-buffering duration for the client device.

13. The system of claim 12, wherein the program instructions are further executable by the at least one processor to cause the system to:
determine a bitrate for at least a portion of a video stream.

14. The system of claim 12, wherein the program instructions are further executable by the at least one processor to cause the system to:
determine a bandwidth available for a video session.

15. The system of claim 12, wherein the program instructions are further executable by the at least one processor to cause the system to:
identify changes in the bandwidth assigned to a video session during the video session.

16. The system of claim 12, wherein the program instructions are further executable by the at least one processor to cause the system to:
determine an initial delay at a client device caused by buffering of video session data after an initial request for video content.

17. The system of claim 12, wherein the program instructions are further executable by the at least one processor to cause the system to:
determine when a client device must pause a video playback to buffer additional data during a video session.

18. The system of claim 12, wherein the program instructions are further executable by the at least one processor to cause the system to:
identify changes in screen resolution on a client device during a video session.

19. A non-transitory computer-readable storage medium having program instructions stored thereon that, upon execution by one or more computer systems, cause the one or more computer systems to:
capture data packets from network interfaces, the data packets associated with a plurality of video sessions;
correlate the data packets to one of the videos sessions;
identify a protocol used for each of the video sessions;
extract adaptive streaming parameters from each of the video sessions based upon the type of protocol used; and
generate Quality of Experience (QoE) data for the plurality of video sessions.

20. The non-transitory computer-readable storage medium of claim 19, wherein the program instructions, upon execution by the one or more computer systems, further cause the one or more computer systems to:
calculate at least one of: how long the client device has buffered content, how fast the buffer is growing or shrinking, or when the client device will run out of content.
